# EUROPÄISCHE PATENTSCHRIFT

(11) **EP 2 105 641 B1**
(45) Veröffentlichungstag und Bekanntmachung des Hinweises auf die Patenterteilung: **04.07.2012**
(21) Anmeldenummer: 09000388.0
(22) Anmeldetag: 14.01.2009
(51) Int. Cl.: F16K 1/00, F16K 31/122, B29C 49/58

(54) **Ventileinheit und damit ausgestattete Streckblasvorrichtung**
Valve unit and stretch blowing device equipped with one
Unité d'aération et dispositif d'étirage-gonflage en étant équipé

(30) Priorität: 26.03.2008 DE 102008015776
(43) Veröffentlichungstag der Anmeldung: 30.09.2009
(73) Patentinhaber: FESTO AG & Co. KG, 73734 Esslingen (DE)
(72) Erfinder: Larsson, Kristofer, 70184 Stuttgart (DE); Schill, Sebastian, 72581 Dettingen/Erms (DE)
(74) Vertreter: Abel, Martin

(56) Entgegenhaltungen:
- EP-A2- 1 281 901
- DE-A1- 2 432 620

## Beschreibung

Die Erfindung betrifft eine Ventileinheit, insbesondere zur Steuerung des Blasdruckes beim Streckblasen von Kunststoffbehältern, mit einem in einem Ventilgehäuse zwischen einer Offenstellung und einer Schließstellung linear verschiebbar angeordneten Ventilglied, das einen in einer Antriebskammer angeordneten Antriebskolben mit einer rückseitigen, zur Vorgabe der gewünschten Schaltstellung gesteuert mittels eines Antriebsfluides beaufschlagbaren Antriebsfläche aufweist, von dem nach vorne ein Steuerschaft wegragt, der mit einem außen einen Durchtrittsdurchmesser aufweisenden Durchtrittsabschnitt unter Abdichtung und gleitverschieblich eine Wanddurchbrechung der die Antriebskammer begrenzenden Wand durchsetzt und in eine Ventilkammer hineinragt, wobei an seiner vorderen Stirnfläche eine ringförmige Dichtfläche angeordnet ist, die mit einer axial gegenüberliegenden gehäusefesten Ventilsitzfläche zusammenwirken kann, die die Kanalmündung eines ersten Ventilkanals umrahmt, der ebenso wie ein zweiter Ventilkanal in die Ventilkammer einmündet.

Die Erfindung betrifft ferner eine mit einer solchen Ventil-einheit ausgestattete Streckblasvorrichtung, die zum Streckblasen von Kunststoffbehältern geeignet ist.

Eine Ventileinheit und eine Streckblasvorrichtung dieser vorgenannten Art ist sowohl aus der EP 1 281 901 A2 als auch aus der EP 1 271 029 A1 bekannt. Die Ventileinheit dient dort zur Steuerung des Blasdruckes bei der Blasherstellung von Kunststoffbehältern und enthält ein Ventilglied, dessen Steuerschaft unter Abdichtung eine Wanddurchbrechung durchsetzt, um in eine Ventilkammer einzutauchen. In Abhängigkeit von der Stellung des Ventilgliedes sperrt die Stirnfläche des Steuerschaftes eine gegenüberliegende Kanalmündung eines Speisekanals ab oder gibt diese frei, um das überströmen eines eingespeisten Arbeitsfluides in einen ebenfalls in die Ventilkammer einmündenden Arbeitskanal zu ermöglichen, der zu dem zu beaufschlagenden Objekt führt. Das eingespeiste Arbeitsfluid wirkt auf die die Kanalmündung des Speisekanals überdeckende Stirnfläche des Steuerschaftes ein und beaufschlagt dadurch das Ventilglied in Öffnungsrichtung. Durch gesteuerte Beaufschlagung einer rückseitig am Antriebskolben angeordneten Antriebsfläche mittels eines Antriebsfluides, kann eine Schließkraft hervorgerufen werden, die das Ventilglied in einer den Speisekanal absperrenden Schließstellung hält. Zum Umschalten in die Offenstellung wird die Antriebsfläche druckentlastet. Der Durchtrittsdurchmesser des durch die Wanddurchbrechung hindurchtretenden Durchtrittsabachnittes des Steuerschaftes ist im Wesentlichen gleich groß wie die Kanalmündung des Speisekanals, sodass die vom Antriebsfluid zum Schließen des Ventilgliedes und zu dessen Festhalten in der Schließstellung aufzubringende Schließkraft ebenfalls etwa gleich groß ist.

Ein Nachteil der bekannten Anordnung besteht darin, dass sich eine zur Veränderung der von der Ventileinheit steuerbaren Strömungsrate durchgeführte Variation des Durchmessers der Kanalmündung des Speisekanals unmittelbar auf die an dem Ventilglied anstehenden Kräfteverhältnisse auswirkt. Eine Vergrößerung des Durchmessers der Kanalmündung bewirkt eine Vergrößerung der in Öffnungsrichtung wirkenden Kraft, sodass - will man eine Konstanthaltung der aufzubringenden Schließkräfte gewährleisten - auch der Durchtrittsdurchmesser des Steuerschaftes entsprechend vergrößert werden muss. Dies bedingt einen enormen baulichen Änderungsaufwand.

Aus der EP 1 574 771 A2 ist es bereits bekannt, das Ventilglied einer in einer Streckblasvorrichtung eingesetzten Ventileinheit mit einem durchgehenden Verbindungskanal auszustatten, sodass der Arbeitsdruck des Arbeitsfluides auch auf die Rückseite des Ventilgliedes wirkt und eine Druckkraftkompensation stattfindet.

Ein ähnlicher Verbindungskanal durchsetzt das Ventilglied einer in der EP 1 602 867 A1 beschriebenen, als Entlüftungsventil konzipierten Ventileinheit.

Aus der DE 24 32 620 B2 ist ein als Anfahrventil nutzbares Ventil bekannt, das ein durch eine Feder in eine Schließstellung vorgespanntes Ventilglied aufweist. In der Schließstellung taucht das Ventilglied in eine Luftaustrittsöffnung ein und dichtet diese radial außen ab. Zum Öffnen der Luftaustrittsöffnung wird ein Antriebskolben an seiner Vorderseite mit Druckluft beaufschlagt. Die Feder stützt sich an einem Federteller ab, der rückseitig in das durchgehend hohle Ventilglied eintaucht.

Es ist die Aufgabe der vorliegenden Erfindung, Maßnahme vorzuschlagen, die bei einer Ventileinheit der Eingangs genannten Art und einer damit ausgestatteten Streckblasvorrichtung den mit einer Veränderung der zu steuernden Strömungsrate verbundenen konstruktiven Aufwand gering halten.

Zur Lösung dieser Aufgabe ist bei einer Ventileinheit der Eingangs genannten Art vorgesehen, dass der zweite Ventilkanal ein das zu steuernde Arbeitsfluid zuführender Speisekanal und der erste Ventilkanal ein zu dem mit dem Arbeitsfluid zu versorgenden Objekt führender Arbeitskanal ist, dass der Durchtrittsdurchmesser des Durchtrittsabschnittes des Steuerschaftes größer ist als der Außendurchmesser der an der vorderen Stirnfläche des Steuerschaftes angeordneten ringförmigen Dichtfläche, und dass das Ventilglied koaxial von einem Hohlraum durchsetzt ist, in den von der Rückseite her ein ihn verschließender gehäusefester Verschlussschaft hineinragt, der mit einem außen einen Abdichtdurchmesser aufweisenden Abdichtabschnitt unter Abdichtung und gleitverschieblich an der den Hohlraum umschließenden Innenumfangsfläche des Ventilgliedes anliegt.

Die Aufgabe wird ferner durch eine Streckblasvorrichtung gelöst, die mit einer solchen Ventileinheit ausgestattet ist.

Bei der erfindungsgemäßen Anordnung gehört die von der Ventilsitzfläche umschlossene Kanalmündung nicht zum Speisekanal der Ventileinheit, sondern zum Arbeitskanal. Eingespeist wird das Arbeitsfluid in die Ventilkammer im Bereich des Außenumfanges des Steuerschaftes, sodass maßgeblich für die in der Schließstellung des Ventilgliedes wirksame Öffnungskraft die Querschnittsdifferenz zwischen dem Durchtrittsdurchmesser des Steuerschaftes und dem Außendurchmesser der ringförmigen Dichtfläche ist. Die ausgehend von der Offenstellung zum Verlagern des Ventilgliedes in die Schließstellung erforderliche Schließkraft kann über die Größe des Abdichtdurchmessers beeinflusst werden, wobei insbesondere die Möglichkeit besteht, die zum Schließen und zum Festhalten der Schließstellung erförderliche Schließkraft auf zumindest im Wesentlichen den gleichen Wert einzurichten, indem man den Abdichtdurchmesser des Abdichtabschnittes und den Außendurchmesser der ringförmigen Dichtfläche im Wesentlichen gleich groß wählt. Vorteighaft ist ferner, dass sich der Querschnitt der Kanalmündung des Arbeitskanals zur Variation der Durchflussrate in einem gewissen Rahmen verändern lässt, ohne sich auf die aufzubringende Schließkraft auszuwirken. Es ist in solchen Fällen insbesondere nicht erforderlich, umfangreiche konstruktive Eingriffe zur Anpassung des Durchtrittsdurchmessers des Steuerschaftes vorzunehmen. Nicht zuletzt bietet der zur Rückseite hin abgedichtete Hohlraum die Möglichkeit, das Ventilglied druckausgeglichen zu konzipieren und trotzdem den rückseitig des Antriebskolbens liegenden Teilraum der Antriebskammer unbeeinflusst vom Arbeitsfluid als Steuerkammer zur Auferlegung eines den Schaltzustand des Ventilgliedes vorgebenden Steuerdruckes zu nutzen.

Vorteilhafte Weiterbildungen der Erfindung gehen aus den Unteransprüchen hervor.

Zum Erhalt der gewünschten Durchmesserdifferenz zwischen dem Durchtrittsdurchmesser des Steuerschaftes und dem Außendurchmesser der Dichtfläche ist der Steuerschaft zweckmäßigerweise innerhalb der Ventilkammer am Außenumfang in axialer Richtung abgestuft. Es liegt insbesondere eine lediglich einfache Abstufung vor.

Der innerhalb der Ventilkammer liegende vordere Endabschnitt des Steuerschaftes ist zweckmäßigerweise zylindrisch ausgebildet, wobei sein Außendurchmesser insbesondere dem Außendurchmesser der ringförmigen Dichtfläche entspricht.

Radial innen ist die ringförmige Dichtfläche zweckmäßigerweise von dem Hohlraum begrenzt. Die stirnseitig am Steuerschafft liegende Hohlraumöffnung hat zweckmäßigerweise einen Durchmesser, der gleich oder vorzugsweise größer ist, als die koaxial gegenüberliegende Kanalmündung des Arbeitskanals.

Durch zumindest im Wesentlichen gleich große Durchmesser am Außenumfang der ringförmigen Dichtfläche und am Außenumfang des Abdichtabschnittes wird erreicht, dass die in Öffnungsrichtung vergleichbar einer Luftfeder auf das Ventilglied einwirkende Fluidkraft des über den Speisekanal zugeführten Antriebsfluides in der Schließstellung und in der Offenstellung des Ventilgliedes im Wesentlichen gleich groß ist. Dies vereinfacht die fluidische Ansteuerung des Antriebskolbens und ermöglicht eine Reduktion der erforderlichen Schließkraft auf ein Minimum.

Zu Gunsten kompakter Abmessungen der Ventileinheit besteht die Möglichkeit, die Durchmesserdifferenz zwischen dem abgedichteten Durchtrittsdurchmesser des Steuerschaftes und dem Außendurchmesser der ringförmigen Dichtfläche soweit zu reduzieren, dass mindestens die an den dynamischen Dichtstellen und an den sonstigen Gleitflächen auftretende Gleitreibung überwunden wird, um das Ventilglied bei druckentlasteter Antriebsfläche des Antriebskolbens in die Offenstellung zu schieben. Die hieraus resultierende geringe Öffnungskraft hat zur Folge, dass der zum Schließen und zum Festhalten der Schließstellung des Ventilgliedes erforderliche Steuerdruck gering sein kann. Dies hat ein geringes Füllvolumen in der von der Antriebsfläche des Antriebskolbens begrenzten Steuerkammer zur Folge, was eine schnelle Entlüftung und somit kurze Umschaltzeiten ermöglicht.

Der Hohlraum innerhalb des Ventilgliedes ist in axialer Richtung zweckmäßigerweise abgestützt, wobei er einen zu der ringförmigen Dichtfläche ausmündenden vorderen Endabschnitt aufweist, dessen Durchmesser geringer ist als der den Abdichtabschnitt des Verschlussschaftes aufnehmende Längenabschnitt des Hohlraumes. Letzter schließt sich über eine Stufe zweckmäßigerweise direkt an den vorderen Endabschnitt an und mündet als rückseitiger Endabschnitt des Hohlraumes zur Antriebsfläche des Antriebskolbens aus.

An den Abdichtabschnitt des Verschlussschaftes schließt sich vorzugsweise ein einen geringeren Außendurchmesser aufweisender Führungsabschnitt an, der gleitverschieblich in einen vorderen Endabschnitt des Hohlraumes eintaucht, wobei zur Optimierung der Führung des Steuerschaftes zusätzlich ein Führungsring vorhanden sein kann.

Sowohl die Dichtfläche, als auch die Ventilsitzfläche könnten prinzipiell schräg bzw. konisch gestaltet sein. Als vorteilhaft wird allerdings eine Ausgestaltung angesehen, bei der diese Flächen jeweils in einer Ebene verlaufen, die zur Längsachse des Ventilgliedes und mithin auch zu dessen Bewegungsrichtung rechtwinkelig verläuft.

Bei dem Ventilglied handelt es sich vorzugsweise um einen einstückigen Körper. Da im Betrieb der Ventileinheit zwischen dem Antriebskolben und dem Steuerschaft in der Regel nur Druckkräfte auftreten, könnten diese Bauteile allerdings auch als separate Komponenten ausgeführt sein, die lediglich aneinander anliegen.

In einer weiteren vorteilhaften Ausführungsform ist der Verschlussschaft koaxial und insbesondere abgedichtet von einer axial verschiebbaren Stange durchsetzt, die durch die Ventilkammer hindurch in den Arbeitskanal eintaucht. Wird die Ventileinheit zum Streckblasen von Kunststoffbehältern eingesetzt, handelt es sich bei dieser Stange um die sogenannte Reckstange, die das mechanische Recken des Vorformlinges des zu formenden Kunststoffbehälters bewirkt, gleichzeitig mit der Innendruckbeaufschlagung dieses Vorformlinges durch den Arbeitskanal hindurch.

Bei einer mit einer solchen Ventileinheit ausgestatteten Streckblasvorrichtung ergibt sich der Vorteil, dass die Ventileinheit direkt in axialer Verlängerung der Blasform angeordnet werden kann, sodass deren Einblaskanal sich direkt koaxial an den Arbeitskanal der Ventileinheit anschließt und folglich die Ventilkammer sehr nahe bei der Blaskammer sitzt, was den Luftverbrauch und die zur Erzeugung des hohen Arbeitsdruckes des Arbeitsfluides erforderliche Energie stark reduziert.

Nachfolgend wird die Erfindung anhand der beiliegenden Zeichnung näher erläutert. In dieser zeigen:

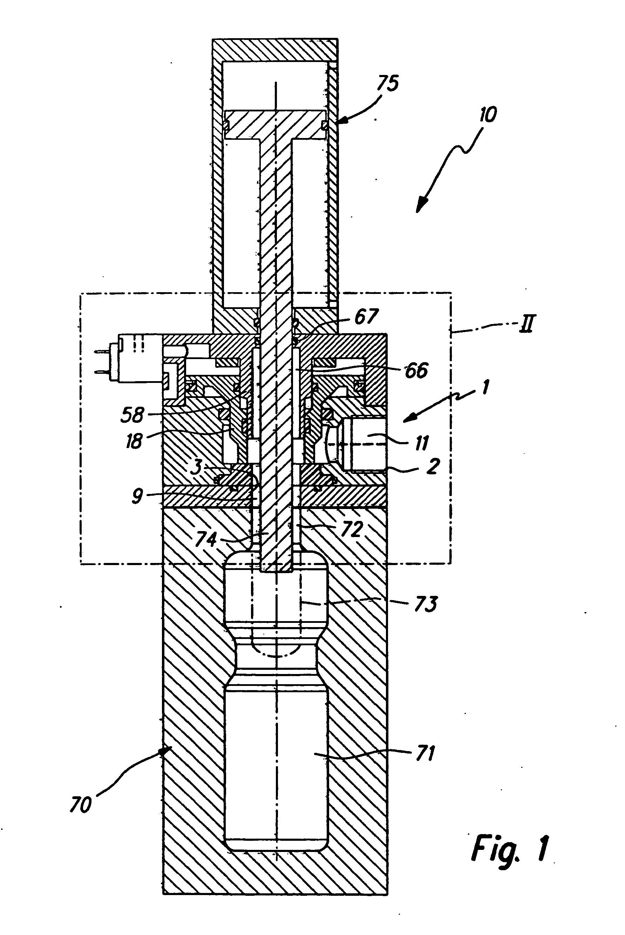

- Figur 1: eine etwas vereinfachte Längsschnittdarstellung ei- ner zum Streckblasen von Kunststoffbehältern einge- setzten Streckblasvorrichtung, die mit einer vor- teilhaften Bauform der erfindungsgemäßen Ventil- einheit ausgestattet ist, und
- Figur 2: den in Figur 1 strichpunktiert umrahmten Aus- schnitt II im Bereich der Ventileinheit in einer vergrößerten Darstellung.

Die in ihrer Gesamtheit mit Bezugsziffer 10 bezeichnete Streckblasvorrichtung enthält eine Blasform 70, in der eine die äußere Form eines herzustellenden Kunststoffbehälters vorgebende Blaskammer 71 ausgebildet ist. In die Blaskammer 71 mündet an einer Stirnseite ein die Wandung der Blasform 70 durchsetzender Einblaskanal 72, durch den hindurch ein unter hohem Arbeitsdruck stehendes Arbeitsfluid, in der Regel Druckluft, in die Blasform 70 eingeblasen wird, um einen in der Blaskammer 71 platzierten, aus einem verformbaren Kunststoffmaterial bestehenden Vorformling 73 aufzublasen und an die die Blaskammer 71 begrenzende Wandung anzudrücken.

Der geschilderte Formgebungsvorgang kann durch eine Reckstange 74 mechanisch unterstützt werden. Die beispielsweise zylindrisch ausgebildete Reckstange 74 lässt sich durch eine geeignete Antriebseinrichtung 75 durch den Einblaskanal 72 hindurch axial in die Blaskammer 71 einfahren, wobei sie ins Innere des entsprechend angeordneten Vorformlinges 73 eintaucht und diesen streckt, damit er durch das zusätzlich eingespeiste Arbeitsfluid über die gesamte Länge der Blaskammer 71 zuverlässig an deren Wandung angedrückt wird.

Die Blasform 70 ist in vorteilhafter Weise an der Vorderseite einer insgesamt mit Bezugsziffer 1 bezeichneten Ventileinheit angeordnet, die die Druckbeaufschlagung der Blaskammer 71 steuert. Die exemplarisch als fluidbetätigter Linearantrieb ausgebildete Antriebseinrichtung 75 sitzt insbesondere rückseitig an der Ventileinheit 1, sodass letztere zwischen der Antriebseinrichtung 75 und der Blasform 70 angeordnet ist. Eine besonders schlanke Bauweise ist hierbei vor allem auch deshalb möglich, weil die Reckstange 74 die Ventileinheit 1 axial beweglich durchsetzt.

Anstelle einer fluidkraftbetriebenen Antriebseinrichtung 75 könnte auch eine andere Art von Antriebseinrichtung eingesetzt werden, beispielsweise ein elektrischer Antrieb oder eine mechanische Nockensteuerung.

Ungeachtet des geschilderten Anwendungsfalles lässt sich die Ventileinheit 1 auch für andere fluidische Ansteuerzwecke nutzen.

Die Ventileinheit 1 kann mit Arbeitsdrücken unterschiedlicher Höhe betrieben werden. Sie eignet sich sowohl für Niederdruckanwendungen als auch für Hochdruckanwendungen. Speziell in Verbindung mit der Blasherstellung von Kunststoffbehältern besteht auch die Möglichkeit, mehrere Ventileinheiten 1 zu einem Ventilblock zusammenzufassen - insbesondere bestehend aus drei Ventileinheiten -, wobei sie jeweils ihren eigenen Einlass besitzen und ihre Auslässe zusammengeschaltet sind. Eine Ventileinheit wird hier mit Niederdruck betrieben, zum Zwecke des sogenannten Vorblasens, eine weitere Ventileinheit - insbesondere gemäß der in der Zeichnung abgebildeten Ventileinheit - wird mit Hochdruck betrieben, um den für die Endformgebung eines Kunststoffbehälters erforderlichen Blasdruck zu liefern. Eine weitere Ventileinheit dient zur Entlüftung der Blaskammer 71 nach Fertigstellung des Kunststoffbehälters.

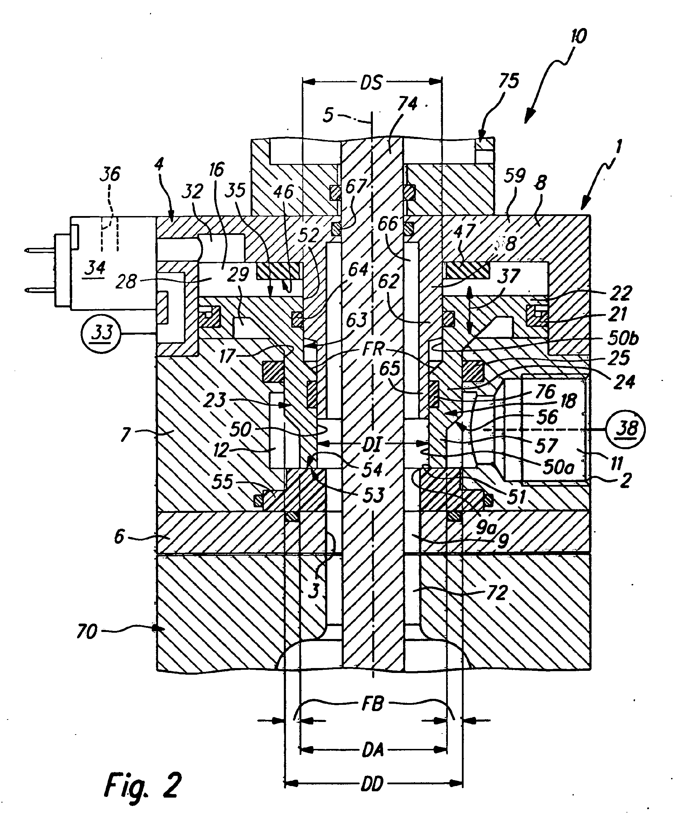

Die in Figur 2 vergrößert abgebildete Ventileinheit 1 umfasst ein Ventilgehäuse 4, mit einer zweckmäßigerweise die Längeachse definierenden Hauptachse 5. Es kann insbesondere mehrteilig ausgeführt sein und setzt sich beim Ausführungsbeispiel aus drei in Achsrichtung der Hauptachse 5 aneinandergereihten Gehäuseteilen zusammen, wobei es sich um ein in der Zeichnung unten liegendes Vorderteil 6, ein in der Zeichnung oben liegendes Hinterteil 8 und ein dazwischen sitzendes Zwischenteil 7 handelt. Mittels nicht dargestellten Zugankern oder sonstigen Befestigungsmitteln sind die genannten Gehäuseteile 6, 7, 8 lösbar zusammengespannt.

Ungeachtet der Benennung der verschiedenen Gehäuseteile lässt sich die Ventileinheit 1 mit beliebiger Ausrichtung betreiben.

Seitlich außen am Zwischenteil 7 befindet sich eine als Einlass bezeichnete Öffnung 2, die während des Betriebes der Ventileinheit 1 mit einer das Arbeitsfluid liefernden externen Arbeitsdruckquelle 38 verbunden ist. An der vorderen Stirnseite des Vorderteils 6 ist ein zu der Hauptachse 5 koaxialer Auslass 3 vorhanden, an den sich der Einblaskanal 72 anschließt und der folglich das Arbeitsfluid zu dem zu versorgenden Objekt - hier die Blaskammer 71 bzw. der Vorformling 73 - führt.

Im Innern des Ventilgehäuses 4, insbesondere in dem Zwischenteil 7, ist eine Ventilkammer 12 ausgebildet. In die Ventilkammer 12 mündet an der Vorderseite mit einer als Arbeitskanalmündung 9a bezeichneten Kanalmündung ein erster Ventilkanal in Gestalt eines mit dem Auslass 3 verbundenen Arbeitskanals 9. Seitlich in die Ventilkammer 12 mündet ein zweiter Ventilkanal in Gestalt eines mit dem Einlass 2 verbundenen Speisekanals 11.

Mit axialem Abstand zu der Ventilkammer 12 ist im Ventilgehäuse 4 eine Antriebskammer 16 ausgebildet. Sie wird gemeinsam von dem Hinterteil 8 und dem Zwischenteil 7 begrenzt, wobei sie zweckmäßigerweise in dem Hinterteil 8 ausgebildet ist.

Die die Antriebskammer 16 umgrenzende Wand des Ventilgehäuses 4 weist eine zur Hauptachse 5 koaxiale und vorzugsweise zylindrische Wanddurchbrechung 17 auf, die die Antriebskammer 16 mit der Ventilkammer 12 verbindet. Die Wanddurchbrechung 17 mündet axial gegenüberliegend der Arbeitskanalmündung 9a in die Ventilkammer 12 ein.

Im Innern des Ventilgehäuses 4 befindet sich ein linear, in der Achsrichtung der Hauptachse 5 bewegliches Ventilglied 18.

Dieses umfasst einen in der Antriebskammer 16 angeordneten Antriebskolben 22 und einen vorne von dem Antriebskolben 22 in koaxialer Anordnung axial wegragenden Steuerschaft 23, der durch die Wanddurchbrechung 17 hindurch in die Ventilkammer 12 hineinragt, wobei er innerhalb der Ventilkammer 12 endet.

Der Steuerschaft 23 verfügt über einen im Folgenden als Durchtrittsabschnitt 24 bezeichneten Längenabschnitt, der innerhalb der Wanddurchbrechung 17 zu liegen kommt und eine Länge aufweist, die gewährleistet, dass er unabhängig von der Stellung des Ventilgliedes 18 ständig von der Wanddurchbrechung 17 umschlossen ist.

Der im Folgenden als Durchtrittsdurchmesser "DD" bezeichnete Außendurchmesser des Durchtrittsabschnittes 24 entspricht dem Innendurchmesser der Wanddurchbrechung 17. Im Bereich der Wanddurchbrechung 17 trägt das Ventilgehäuse 4 eine zur Hauptachse 5 konzentrische ringförmige Dichtung 25, die am Außenumfang des Durchtrittsabschnittes 24 anliegt, sodass dieser bezüglich dem Ventilgehäuse 4 abgedichtet ist und kein Fluidübertritt zwischen der Ventilkammer 12 und der Antriebskammer 16 möglich ist.

Der Antriebskolben 22 unterteilt die Antriebskammer 16 axial in einen hinteren Teilraum 28 und einen vorderen Teilraum 29. Der vordere Teilraum 29 befindet sich auf der der Ventilkammer 12 zugewandten Seite. In ihn mündet die Wanddurchbrechung 17 ein.

Der in der Zeichnung oben liegende hintere Teilraum 28 wird im Folgenden auch als Steuerraum bezeichnet und kommuniziert mit einem das Ventilgehäuse 4 durchsetzenden Steuerkanal 32. Bevorzugt ist der Steuerkanal 32 in dem Hinterteil ausgebildet.

Über den Steuerkanal 32 kann ein Antriebsfluid in den Steuerraum 28 eingespeist oder aus diesem abgeführt werden. Das Antriebsfluid steht unter einem gewissen Steuerdruck, der durch eine externe Antriebsfluidquelle 33 zur Verfügung gestellt wird.

Die dem Steuerraum 28 zugewandte rückseitige Stirnfläche des Antriebskolbens 22 sei im Folgenden als Antriebsfläche 35 bezeichnet. Sie ist dem im Steuerraum 28 herrschenden Steuerdruck ausgesetzt.

Eine außen an das Ventilgehäuse 4 angebaute, bei Bedarf aber auch zumindest teilweise in das Ventilgehäuse 4 integrierte steuerventileinrichtung 34 ermöglicht eine gesteuerte Fluidbeaufschlagung des Steuerraumes 28 und folglich der Antriebsfläche 35. Sie ist beispielhaft von einem elektrisch betätigbaren 3/2-Wegeventil gebildet und ist in der Lage, den Steuerraum 28 entweder mit der Antriebsfluidquelle 33 oder mit einem zur Atmosphäre führenden Entlüftungskanal 36 zu verbinden. Somit kann im Steuerraum 28 entweder der Steuerdruck oder atmosphärischer Druck angelegt werden.

Es können zusätzliche Mittel zur Druckregelung vorgesehen sein, die es ermöglichen, den Steuerdruck in Abhängigkeit vom jeweiligen Anwendungsfall zu variieren.

Das Ventilglied 18 ist koaxial von einem Hohlraum 50 durchsetzt. Dieser mündet über eine vordere Hohlraummündung 51 zur Ventilkammer 12 und über eine rückseitige Hohlraummündung 52 zu dem Steuerraum 28 aus.

Die in der Ventilkammer 12 liegende, dem Antriebskolben 22 axial abgewandte vordere Stirnfläche des Steuerschaftes 23 bildet eine ringförmige Dichtfläche 53. Ihr liegt axial eine zugewandte ringförmige Ventilsitzfläche 54 gegenüber, die um die Arbeitskanalmündung 9a herum gehäusefest angeordnet ist. Beim Ausführungsbeispiel ist die Ventilsitzfläche 54 Bestandteil eines bezüglich dem Ventilgehäuse 4 eigenständigen Ventilsitzkörpers 55, der im Ventilgehäuse 4 unter Abdichtung fixiert ist. Er besteht insbesondere aus einem Kunststoffmaterial, während das Ventilglied 18 zweckmäßigerweise aus Metall besteht, sodass ein dichter Kontakt vorliegt, wenn die ringförmige Dichtfläche 53 mit einer gewissen Kraft an die Ventilsitzfläche 54 angedrückt wird.

Abweichend vom Ausführungsbeispiel könnte die Ventilsitzfläche 54 auch unmittelbar an der Wandung des Ventilgehäuses 4 ausgebildet sein.

Durch gesteuerte Fluidbeaufschlagung der Antriebsfläche 35 kann das Ventilglied 18 unter Ausführung einer linearen, axialen Umschaltbewegung 37 zwischen einer aus der Zeichnung ersichtlichen, hier nach unten verlagerten Schließstellung, und einer weiter nach oben verlagerten Offenstellung umgeschaltet werden. In der Schließstellung liegt das Ventilglied 18 mit seiner ringförmigen Dichtfläche 53 dichtend an der ventilsitzfläche 54 an, sodass der Arbeitskanal 9 von dem den Steuerschaft 23 umschließenden Bereich der Ventilkammer 12 und somit auch von dem in diesen Bereich einmündenden Speisekanal 11 abgetrennt ist.

In der Offenstellung ist die Dichtfläche 53 von der Ventilsitzfläche 54 abgehoben, sodass durch die Ventilkammer 12 hindurch eine Fluidverbindung zwischen dem Speisekanal 11 und dem Arbeitskanal 9 vorliegt.

Ersichtlich erfolgt das Verschließen und Freigeben der Verbindung zwischen Speisekanal 11 und Arbeitskanal 9 nach dem Prinzip eines Sitzventils. Zweckmäßigerweise ist dabei sowohl die ringförmige Dichtfläche 53 als auch die Ventilsitzfläche 54 in einer Ebene verlaufend ausgebildet, die sich rechtwinkelig zu der Hauptachse 5 erstreckt.

Zweckmäßigerweise ist die ringförmige Dichtfläche 53 radial innen unmittelbar von der vorderen Hohlraummündung 51 begrenzt. Deren Durchmesser entspricht somit dem Innendurchmesser "DI" der ringförmigen Dichtfläche 53.

Der Steuerschaft 23 ist innerhalb der Ventilkammer 12 an seinem Außenumfang in axialer Richtung abgestuft. Die Abstufung 56 ist beispielsweise als konische Ringfläche ausgebildet, und verbindet den Durchtrittsabschnitt 24 mit dem diesbezüglich einen kleineren Außendurchmesser aufweisenden vorderen Endabschnitt 57 des Steuerschaftes 23. Der vordere Endabschnitt 57 ist außen zweckmäßigerweise zylindrisch ausgebildet und erstreckt sich bis hin zu der ringförmigen Dichtfläche 53, wobei der Außendurchmesser des vorderen Endabschnittes 57 zweckmäßigerweise mit dem Außendurchmesser "DA" der ringförmigen Dichtfläche 53 übereinstimmt.

Bedingt durch die Differenz der Außendurchmesser des abgedichteten Durchtrittsabschnittes 24 und der ringförmigen Dichtfläche 53 ergibt sich in der Schließstellung des Ventilgliedes 18 eine zwischen diesen beiden Durchmessern liegende ringförmige Beaufschlagungsfläche "FB", die dem in der Ventilkammer 12 herrschenden Arbeitsdruck ausgesetzt ist. Daraus resultiert eine in der Öffnungsrichtung auf das Ventilglied 18 einwirkende Kraft - im Folgenden als "öffnungskraft" bezeichnet -, die durch den im Steuerraum 28 herrschenden Steuerdruck zu überwinden ist, um das Ventilglied 18 in der Schließstellung zu halten. Das Halten der Schließstellung ist hierbei mit einem relativ geringen Steuerdruck möglich, weil die Antriebsfläche 35 wesentlich größer ist als die dem Arbeitsdruck ausgesetzte Wirkfläche des Ventilgliedes 18 in Form der Beaufschlagungsfläche "FB".

Obgleich der Hohlraum 50 zur Steuerkammer 28 hin ausmündet, ist er zu dieser hin doch verschlossen. Hierzu taucht in den Hohlraum 50 von der Rückseite des Ventilgliedes 18 her ein fest am Ventilgehäuse 4 angeordneter Verschlussschaft 58 hinein, der mit Abstand vor der Ventilsitzfläche 54 endet. Vorzugsweise ist der Verschlussschaft 58 an dem den Steuerraum 28 rückseitig abschließenden Abschlusswandabschnitt 59 des Ventilgehäuses 4 angeordnet, insbesondere in Gestalt eines einstückig angeformten Fortsatzes. Der Verschlussschaft 58 durchsetzt somit den Steuerraum 28, was zur Folge hat, dass dieser ein Ringraum ist.

Der Verschlussschaft 58 weist einen unabhängig von der Stellung des Ventilgliedes 18 unter Abdichtung in den Hohlraum 50 eintauchenden Längenabschnitt auf, der als Abdichtabschnitt 62 bezeichnet sei. Er liegt mit seinem Außenumfang unter Abdichtung und gleitverschieblich an der den Hohlraum umschließenden Innenumfangsfläche 63 des Ventilgliedes 18 an, wobei der Kontaktbereich abgedichtet ist durch eine ringförmige Dichtung 64, die den Abdichtabschnitt 62 koaxial umschließt und im Bereich der Innenumfangsfläche 63 in einer Ringnut des Ventilgliedes 18 gehalten ist.

Da der Hohlraum 50 zur vorderen Stirnfläche des Steuerschaftes 23 hin offen ist, wird der Hohlraum 50 über die vordere Hohlraummündung 51 mit Fluid beaufschlagt. Auf Grund der geschilderten Abdichtung zwischen dem Abschlusswandabschnitt 59 und der Innenfläche 63 des Hohlraumes 50 ist dieses Fluid jedoch an einem Austritt aus dem Hohlraum 50 gehindert.

Der Hohlraum 50 ist in axialer Richtung zweckmäßigerweise abgestuft. Beim Ausführungsbeispiel enthält er eine einzige Abstufung, durch die er in einen zu der ringförmigen Dichtfläche 53 führenden vorderen Endabschnitt 50a und einen zum Steuerraum 28 ausmündenden hinteren Endabschnitt 50b unterteilt ist. Der hintere Endabschnitt 50b nimmt den Abdichtabschnitt 62 auf und entspricht in seinem Innendurchmesser dem im Folgenden als Abdichtdurchmesser "DS" bezeichneten Außendurchmesser des Abdichtabschnittes 62. Der Durchmesser des vorderen Endabschnittes 50a des Hohlraumes 50 ist kleiner als der Abdichtdurchmesser "DS".

Um eine optimale Verschiebeführung für das Ventilglied 18 zu erhalten, ragt der Verschlussschaft 58 mit einem sich axial an den Abdichtabschnitt 62 anschließenden, frei endenden Führungsabschnitt 65 gleitverschieblich in den vorderen Endabschnitt 50a, des Hohlraumes 50 hinein. Sein Außendurchmesser ist folglich kleiner als derjenige des Abdichtabschnittes 62 und entspricht dem Innendurchmesser des vorderen Endabschnittes 50a. Ein im Bereich des vorderen Endabschnittes 50a in der Innenumfangsfläche 63 fixierter Führungsring 76 umschließt den Führungsabschnitt 65 koaxial und liegt an dessen Außenumfang mit einem geringen Reibkoeffizienten an.

Alternativ kann der Führungsring 76 auch an dem Führungsabschnitt 65 angeordnet sein. Eine Fixierung am jeweils anderen Bauteil ist im Übrigen auch bei den Dichtungen 25, 64 möglich.

Der Antriebskolben 22 trägt zur fluiddichten Abtrennung seiner beiden Zeiträume 28, 29 am Außenumfang zweckmäßigerweise auch eine ringförmige Dichtung 21, die an der die Antriebskammer 16 umschließenden Mantelfläche der Wandung des Ventilgehäuses 4 gleitverschieblich anliegt.

In der Offenstellung des Ventilgliedes 18 ist auch die ringförmige Dichtfläche 53 dem Arbeitsdruck ausgesetzt. Allerdings gelangt das Arbeitsfluid zwischen dem Führungsabschnitt 65 und der Wandung des Ventilgliedes 18 hindurch auch in den axial innerhalb der ringförmigen Dichtung 64 liegenden Bereich des hinteren Endabschnittes 50b und wirkt somit in der Schließrichtung auf die von der Abstufung des Hohlraumes 50 definierte Ringfläche "FR", die außen vom Abdichtdurchmesser "DS" und innen vom Innendurchmesser "DI" begrenzt ist. Auf diese Weise lässt sich in einem anwendungsspezifisch wählbaren Ausmaß eine Kompensation der in der Offenstellung zusätzlich auf das Ventilglied 18 einwirkenden, vom Arbeitsfluid herrührenden Druckkräfte erzielen.

Besonders vorteilhaft ist in diesem Zusammenhang eine gegenseitige Abstimmung der Durchmesser in einer Weise, dass der Außendurchmesser "DA" der ringförmigen Dichtfläche zumindest im Wesentlichen gleich groß ist wie der abgedichtete Abdichtdurchmesser "DS". Dies führt dazu, dass auch die ringförmige Dichtfläche 53 und die Ringfläche "FR" zumindest im Wesentlichen gleich groß sind und sich die darauf einwirkenden Druckkräfte kompensieren.

Zweckmäßig ist es bei dieser Auslegung, wenn der Außendurchmesser "DA" der ringförmigen Dichtfläche 53 geringfügig größer ist als der Abdichtdurchmesser "DS", sodass sich in der Offenstellung des Ventilgliedes zusätzlich zu der Beaufschlagungsfläche "FB" eine resultierende Wirkfläche in der Öffnungsrichtung einstellt.

Während die Schließstellung durch den Kontakt zwischen Dichtfläche 53 und Ventilsitzfläche 54 definiert wird, ist die Offenstellung dadurch vorgegeben, dass der Antriebskolben 22 mit seiner Antriebsfläche 35 auf eine gehäusefeste Anschlagfläche 46 aufläuft. Von Vorteil ist es hierbei, wenn diese Anschlagfläche 46 an einer konzentrisch um den Verschlussschaft 58 herum angeordneten gummielastischen Pufferscheibe 47 gebildet ist, die in dem Steuerraum 28 angeordnet ist.

Der Anschlagkolben 22 und der Steuerschaft 23 sind zweckmäßigerweise fest miteinander verbunden und insbesondere einstückig miteinander ausgebildet. Es kann sich aber auch um zwei separate Teile handeln, die nur lose axial aneinander anliegen.

Der Verschlussschaft 58 kann insgesamt durchbrechungslos ausgebildet sein, sodass er als Wand fungiert, die den gesamten vom Abdichtabschnitt 62 umgrenzten Querschnitt absperrt. Hierzu kann der Verschlussschaft 58 beispielsweise aus Vollmaterial bestehen. Allerdings lässt sich die Verschlussfunktion des Verschlussschaftes 58 auch dann realisieren, wenn wie beim Ausführungsbeispiel die eingangs erwähnte Reckstange 74 koaxial durch ihn hindurchgeführt ist. Hierzu verfügt dann der Verschlussschaft 58 über eine koaxial durchgehende Durchgangsöffnung 66, die an der Vorderseite - innerhalb des hohlen Ventilgliedes 18 - zur ventilkammer 12 hin offen ist und andernends an der Rückseite des ventilgehäuses 4 ausmündet, an der beim Ausführungsbeispiel die Antriebseinrichtung 75 angebaut ist.

Um ein Entweichen von Fluid durch den hohlen Verschlussschaft 58 hindurch zu vermeiden, kann am Ventilgehäuse 4 eine die Reckstange 74 konzentrisch mit Dichtkontakt umschließende ringförmige Dichtung 67 angeordnet sein. Diese Dichtung 67 dichtet die Durchgangsöffnung 66 an ihrem rückseitigen Endbereich zur Umgebung hin ab.

Die axial hin und her bewegliche Reckstange 74 ragt durch den Verschlussschaft 58, den sich daran anschließenden Abschnitt der Ventilkammer 62, den sich daran koaxial anschließenden Arbeitskanal 9 und den sich daran wiederum koaxial anschließenden Einblaskanal 72 hindurch in die Blaskammer 71 hinein.

Auch bei anderen Anwendungen der Ventileinheit 1 kann vergleichbar der Reckstange 74 eine Stange durch die Ventileinheit 1 hindurchgeführt werden.

Abschließend sei noch auf die Möglichkeit verwiesen, unmittelbar durch den Verschlussschaft 58 hindurch eine gesteuerte Entlüftung des Arbeitskanals 9 bei in Schließstellung befindlichem Ventilglied 18 vorzunehmen. Als Entlüftungskanal lässt sich beispielsweise die Durchgangsöffnung 66 nutzen. Es ist dann lediglich an Stelle einer ständigen Abdichtung der Durchgangsöffnung 66 ein Absperrventil vorzusehen, das zu Entlüftungszwecken geöffnet wird, ansonsten aber geschlossen ist, um ein Entweichen von Arbeitsfluid durch den Verschlussschaft 58 hindurch zu vermeiden.

## Patentansprüche

1. Ventileinheit, insbesondere zur Steuerung des Blasdruckes beim Streckblasen von Kunststoffbehältern, mit einem in einem Ventilgehäuse (4) zwischen einer Offenstellung und einer Schließstellung linear verschiebbar angeordneten Ventilglied (18), das einen in einer Antriebskammer (16) angeordneten Antriebskolben (22) mit einer rückseitigen, zur Vorgabe der gewünschten Schaltstellung gesteuert mittels eines Antriebsfluides beaufschlagbaren Antriebsfläche (35) aufweist, von dem nach vorne ein Steuerschaft (23) wegragt, der mit einem außen einen Durchtrittsdurchmesser aufweisenden Durchtrittsabschnitt (24) unter Abdichtung und gleitverschieblich eine Wanddurchbrechung (17) der die Antriebskammer (16) begrenzenden Wand durchsetzt und in eine Ventilkammer (12) hineinragt, wobei an seiner vorderen Stirnfläche eine ringförmige Dichtfläche (53) angeordnet ist, die mit einer axial gegenüberliegenden gehäusefesten Ventilsitzfläche (54) zusammenwirken kann, die die Kanalmündung eines ersten Ventilkanals umrahmt, der ebenso wie ein zweiter Ventilkanal in die Ventilkammer (12) einmündet, **dadurch gekennzeichnet, dass** der zweite Ventilkanal ein das zu steuernde Arbeitsfluid zuführender Speisekanal (11) und der erste Ventilkanal ein zu dem mit dem Arbeitsfluid zu versorgenden Objekt führender Arbeitskanal (9) ist, dass der Durchtrittsdurchmesser des Durchtrittsabschnittes (24) des Steuerschaftes (23) größer ist als der Außendurchmesser der ringförmigen Dichtfläche (53), und dass das Ventilglied (18) koaxial von einem Hohlraum (50) durchsetzt ist, in den von der Rückseite her ein ihn verschließender gehäusefester Verschlussschaft (58) hineinragt, der mit einem außen einen Abdichtdurchmesser aufweisenden Abdichtabschnitt (62) unter Abdichtung und gleitverschieblich an der den Hohlraum (50) umschließenden Innenumfangsfläche (63) des Ventilgliedes (18) anliegt.

2. Ventileinheit nach Anspruch 1, **dadurch gekennzeichnet, dass** der Steuerschaft (23) innerhalb der Ventilkammer (12) am Außenumfang in axialer Richtung abgestuft ist, wobei die Abstufung (56) den Durchtrittsabschnitt (24) mit dem diesbezüglich einen kleineren Außendurchmesser aufweisenden und zu der ringförmigen Dichtfläche (53) führenden vorderen Endabschnitt (57) des Steuerschaftes (23) verbindet und wobei zweckmäßigerweise der vordere Endabschnitt (57) des Steuerschaftes (23) außen zylindrisch ausgebildet ist und in seinem Außendurchmesser dem Außendurchmesser der ringförmigen Dichtfläche (53) entspricht.

3. Ventileinheit nach Anspruch 1 oder 2, **dadurch gekennzeichnet, dass** die ringförmige Dichtfläche (53) radial innen von dem Hohlraum (50) begrenzt ist.

4. Ventileinheit nach einem der Ansprüche 1 bis 3, **dadurch gekennzeichnet, dass** der Durchmesser des Hohlraumes (50) an seiner in der Ventilkammer (12) liegenden vorderen Hohlraummündung (51) gleich groß oder größer ist, als die zu ihm koaxiale Kanalmündung des Arbeitskanals (9).

5. Ventileinheit nach einem der Ansprüche 1 bis 4, **dadurch gekennzeichnet, dass** der Außendurchmesser der ringförmigen Dichtfläche (53) und der abgedichtete Abdichtdurchmesser des Abdichtabschnittes (62) zumindest im Wesentlichen gleich groß sind.

6. Ventileinheit nach einem der Ansprüche 1 bis 5, **dadurch gekennzeichnet, dass** der Außendurchmesser der ringförmigen Dichtfläche (53), insbesondere nur geringfügig, größer ist, als der abgedichtete Abdichtdurchmesser des Abdichtabschnittes (62).

7. Ventileinheit nach einem der Ansprüche 1 bis 6, **dadurch gekennzeichnet, dass** der Hohlraum (50) in axialer Richtung abgestuft ist und einen zu der ringförmigen Dichtfläche (53) ausmündenden vorderen Endabschnitt (50a) aufweist, dessen Durchmesser geringer ist als ein den Abdichtabschnitt (62) aufnehmender Längenabschnitt, wobei zweckmäßigerweise der den Abdichtabschnitt (62) aufnehmende Längenabschnitt des Hohlraumes (50) in einem zu der Antriebsfläche (35) des Antriebskolbens (22) ausmündenden rückseitigen Endabschnitt (50b) des Hohlraumes (50) gebildet ist.

8. Ventileinheit nach Anspruch 7, **dadurch gekennzeichnet, dass** der Verschlussschaft (58) mit einem bezüglich dem Abdichtabschnitt (62) einen geringeren Außendurchmesser aufweisenden Führungsabschnitt (65) gleitverschieblich in den vorderen Endabschnitt (50a) des Hohlraumes (50) eintaucht, wobei zweckmäßigerweise zwischen dem Führungsabschnitt (65) und dem Ventilglied (18) ein Führungsring (76) angeordnet ist.

9. Ventileinheit nach einem der Ansprüche 1 bis 8, **dadurch gekennzeichnet, dass** sich die ringförmige Dichtfläche (53) und die mit dieser kooperierende Ventilsitzfläche (54) jeweils in einer zur Längsachse des Ventilgliedes (18) rechtwinkeligen Ebene erstrecken.

10. Ventileinheit nach einem der Ansprüche 1 bis 9, **dadurch gekennzeichnet, dass** der Antriebskolben (22) und der Steuerschaft (23) fest und insbesondere einstückig miteinander verbunden sind, wobei zweckmäßigerweise die Antriebsfläche (35) des Antriebskolbens (22) größer ist als die in der Schließstellung und in der Offenstellung von dem in der Ventilkammer (12) herrschenden Arbeitsdruck beaufschlagte resultierende Wirkfläche des Ventilgliedes (18).

11. Ventileinheit nach einem der Ansprüche 1 bis 10, **dadurch gekennzeichnet, dass** der Verschlussschaft (58) koaxial von einer axial verschiebbaren Stange durchsetzt ist, die durch die Ventilkammer (12) hindurch in den Arbeitskanal (9) eintaucht.

12. Ventileinheit nach Anspruch 11, **dadurch gekennzeichnet, dass** die Stange als Reckstange (74) für Streckblaseinsätze ausgebildet ist.

13. Streckblasvorrichtung zur Herstellung von Kunstotoffbehältern und ausgestattet mit einer Ventileinheit gemäß einem der Ansprüche 1 bis 12.

14. Streckblasvorrichtung nach Anspruch 13, **dadurch gekennzeichnet, dass** rückseitig außen am Ventilgehäuse (4) der Ventileinheit (1) eine Antriebseinrichtung (75) zum Hervorrufen einer Linearbewegung einer Reckstange (74) angeordnet ist, wobei die Reckstange (74) die Ventileinheit (1) durchsetzt.

15. Streckblasvorrichtung nach Anspruch 13 oder 14, **dadurch gekennzeichnet, dass** an der Vorderseite der Ventileinheit (1) eine Blasform (70) angeordnet ist, die einen mit einer Blaskammer (71) kommunizierenden Einblaskanal (72) aufweist, der mit dem Arbeitskanal (9) der Ventileinheit (1) verbunden ist, wobei der Arbeitskanal (9) und der Einblaskanal(72) koaxial aufeinanderfolgend angeordnet sind und eine die Ventileinheit (1) durchsetzende Reckstange (74) durch diese beiden Kanäle hindurch in die Blaskammer (71) eintaucht.

## Claims

1. Valve unit, in particular for the control of the blowing pressure in the stretch blow moulding of plastic containers, with a valve member (18) mounted in a valve casing (4) so as to be capable of sliding linearly between an open position and a closed position and having a driving piston (22) mounted in a drive chamber (16) with a rear driving surface (35) which may be pressurised by a drive fluid to preset the desired operating position, and from which there extends forwards a control shaft (23) which, with a passage section (24) having an external passage diameter, under sealing and with sliding movement, passes through a wall opening (17) in the wall bounding the drive chamber (16) and extends into a valve chamber (12), wherein on its front end face there is provided an annular sealing surface (53) which is able to interact with an axially opposite valve seat surface (54) fixed to the casing and encompassing the passage outlet of a first valve passage which, similarly to a second valve passage, leads into the valve chamber (12), **characterised in that** the second valve passage is a feed passage (11) supplying the operating fluid to be controlled, and the first valve passage is an operating passage (9) leading to the object to be supplied with the operating fluid, that the passage diameter of the passage section (24) of the control shaft (23) is greater than the external diameter of the annular sealing surface (53), and that through the valve member (18) there passes coaxially a hollow space (50), into which there extends from the rear a closing shaft (58) fixed to the casing and sealing the hollow space and fitting up against the inner peripheral surface (63) of the valve member (18) encompassing the hollow space (50) with sealing and sliding movement, with a sealing section (62) which has an outside sealing diameter.

2. Valve unit according to claim 1, **characterised in that** the control shaft (23) is stepped within the valve chamber (12) on the outer periphery in the axial direction, wherein the step (56) joins the passage section (24) to the front end section (57) of the control shaft (23) which has a smaller external diameter than the former and leads to the annular sealing surface (53), and wherein expediently the front end section (57) of the control shaft (23) is cylindrical on the outside and corresponds in its external diameter to the external diameter of the annular sealing surface (53).

3. Valve unit according to claim 1 or 2, **characterised in that** the annular sealing surface (53) is bounded on the radial inside by the hollow space (50).

4. Valve unit according to any of claims 1 to 3, **characterised in that** the diameter of the hollow space (50) at its front hollow space outlet (51) lying in the valve chamber (12) is the same size or greater than the passage outlet of the operating passage (9) which is coaxial to it.

5. Valve unit according to any of claims 1 to 4, **characterised in that** the external diameter of the annular sealing surface (53) and the sealed sealing diameter of the sealing section (62) are at least substantially the same size.

6. Valve unit according to any of claims 1 to 5, **characterised in that** the external diameter of the annular sealing surface (53) is greater, in particular only slightly, than the sealed sealing diameter of the sealing section (62).

7. Valve unit according to any of claims 1 to 4, **characterised in that** the hollow space (50) is stepped in the axial direction and has a front end section (50a) opening out at the annular sealing surface (53) and with a diameter smaller than a length section accommodating the sealing section (62), wherein expediently the length section of the hollow space (50) accommodating the sealing section (62) is formed in a rear end section (50b) of the hollow space (50) opening out at the driving surface (35) of the driving piston (22).

8. Valve unit according to claim 7, **characterised in that** the closing shaft (58) dips with sliding movement into the front end section (50a) of the hollow space (50) with a guide section (65) which has a smaller external diameter than the sealing section (62), wherein expediently a guide ring (76) is arranged between the guide section (65) and the valve member (18).

9. Valve unit according to any of claims 1 to 8, **characterised in that** the annular sealing surface (53) and the valve seat surface (54) cooperating with the former each extend in a plane at right-angles to the longitudinal axis of the valve member (18).

10. Valve unit according to any of claims 1 to 9, **characterised in that** the driving piston (22) and the control shaft (23) are rigidly and in particular integrally connected to one another, wherein expediently the driving surface (35) of the driving piston (22) is greater than the effective surface of the valve member (18) resulting from the operating pressure prevailing in the valve chamber (12) in the closed position and in the open position.

11. Valve unit according to any of claims 1 to 10, **characterised in that** an axially movable bar passes coaxially through the closing shaft (58) and dips through the valve chamber (12) into the operating passage (9).

12. Valve unit according to claim 11, **characterised in that** the bar is designed as a stretching bar (74) for stretch blow moulding inserts.

13. Stretch blow moulding apparatus for the production of plastic containers and equipped with a valve unit according to any of claims 1 to 12.

14. Stretch blow moulding apparatus according to claim 13, **characterised in that** there is provided at the rear on the outside of the valve casing (4) of the valve unit (1) a drive unit (75) for the generation of a linear movement of a stretching bar (74), wherein the stretching bar (74) passes through the valve unit (1).

15. Stretch blow moulding apparatus according to claim 13 or 14, **characterised in that** there is provided on the front of the valve unit (1) a blowing mould (70) which has a blow-in passage (72) communicating with a blowing chamber (71) and connected to the operating passage (9) of the valve unit (1), wherein the operating passage (9) and the blow-in passage (72) follow one another coaxially and a stretching bar (74) passing through the valve unit (1) dips through these two passages into the blowing chamber (71).

## Revendications

1. Unité de soupape, en particulier pour la commande de la pression de gonflage lors de l'étirage-gonflage de récipients en plastique, avec un organe de soupape (18) disposé de manière mobile linéairement dans un boîtier de soupape (4) entre une position ouverte et une position fermée, qui présente un piston d'entraînement (22) disposé dans une chambre d'entraînement (16) avec une surface d'entraînement (35) arrière pouvant être sollicitée par commande pour la prescription de la position de commutation souhaitée à l'aide d'un fluide d'entraînement, duquel piston dépasse vers l'avant une tige de commande (23) qui traverse avec une section de passage (24) présentant un diamètre de passage extérieur, de manière coulissante et en la rendant étanche, une perforation (17) de la paroi délimitant la chambre d'entraînement (16) et pénètre dans une chambre de soupape (12), sachant que sur sa face frontale avant est disposée une surface étanche (53) annulaire qui peut coopérer avec une surface de siège de soupape (54) fixée au boîtier, opposée axialement qui encadre l'embouchure d'un premier canal de soupape débouchant tout comme un second canal de soupape dans la chambre de soupape (12), **caractérisée en ce que** le second canal de soupape est un canal d'alimentation (11) amenant le fluide de travail à commander et le premier canal de soupape est un canal de travail (9) menant à l'objet à alimenter avec le fluide de travail, **en ce que** le diamètre de passage de la section de passage (24) de la tige de commande (23) est supérieur au diamètre extérieur de la surface étanche annulaire (53), et **en ce que** l'organe de soupape (18) est traversé coaxialement par un espace creux (50), dans lequel une tige de fermeture (58) fixée au boîtier et le fermant pénètre depuis le côté arrière, laquelle tige repose de manière coulissante et étanche avec une section étanche (62) présentant à l'extérieur un diamètre étanche, contre la surface périphérique intérieure (63) entourant l'espace creux (50) de l'organe de soupape (18).

2. Unité de soupape selon la revendication 1, **caractérisée en ce que** la tige de commande (23) est étagée dans la chambre de soupape (12) sur la périphérie extérieure dans le sens axial, sachant que l'étagement (56) relie la section de passage (24) à la section d'extrémité (57) avant de la tige de commande (23) menant à la surface étanche (53) annulaire et présentant un plus petit diamètre que celle-ci et sachant que la section d'extrémité (57) avant de la tige de commande (23) est réalisée de manière appropriée avec une forme extérieure cylindrique et son diamètre extérieur correspond au diamètre extérieur de la surface étanche (53) annulaire.

3. Unité de soupape selon la revendication 1 ou 2, **caractérisée en ce que** la surface étanche annulaire (53) est limitée radialement à l'intérieur par l'espace creux (50).

4. Unité de soupape selon l'une quelconque des revendications 1 à 3, **caractérisée en ce que** le diamètre de l'espace creux (50) est de même taille ou plus grand sur son embouchure d'espace creux (51) avant se trouvant dans la chambre de soupape (12) que l'embouchure coaxiale à celui-ci du canal de travail (9).

5. Unité de soupape selon l'une quelconque des revendications 1 à 4, **caractérisée en ce que** le diamètre extérieur de la surface étanche (53) annulaire et le diamètre étanche de la section étanche (62) sont au moins sensiblement de taille identique.

6. Unité de soupape selon l'une quelconque des revendications 1 à 5, **caractérisée en ce que** le diamètre extérieur de la surface étanche (53) annulaire est supérieur, en particulier uniquement légèrement, au diamètre étanche de la section étanche (62).

7. Unité de soupape selon l'une quelconque des revendications 1 à 6, **caractérisée en ce que** l'espace creux (50) est étagé dans le sens axial et présente une section d'extrémité (50a) avant débouchant vers la surface étanche (53) annulaire, dont le diamètre est inférieur à une section de longueur recevant la section étanche (62), sachant que la section de longueur recevant la section étanche (62) de l'espace creux (50) est formée de manière appropriée dans une section d'extrémité (50b) arrière, débouchant vers la surface d'entraînement (35) du piston d'entraînement (22), de l'espace creux (50).

8. Unité de soupape selon la revendication 7, **caractérisée en ce que** la tige de fermeture (58) s'enfonce avec une section de guidage (65) présentant un diamètre extérieur plus faible que la section étanche (62) de manière coulissante dans la section d'extrémité avant (50a) de l'espace creux (50), sachant qu'un anneau de guidage (76) est disposé de manière appropriée entre la section de guidage (65) et l'organe de soupape (18).

9. Unité de soupape selon l'une quelconque des revendications 1 à 8, **caractérisée en ce que** la surface étanche (53) annulaire et la surface de siège de soupape (54) coopérant avec celle-ci s'étendent respectivement dans un plan perpendiculaire à l'axe longitudinal de l'organe de soupape (18).

10. Unité de soupape selon l'une quelconque des revendications 1 à 9, **caractérisée en ce que** le piston d'entraînement (22) et la tige de commande (23) sont reliés fixement et en particulier d'un seul tenant, sachant que la surface d'entraînement (35) du piston d'entraînement (22) est supérieure de manière appropriée à la surface active de l'organe de soupape (18) résultante sollicitée dans la position fermée et dans la position ouverte par la pression de travail régnant dans la chambre de soupape (12).

11. Unité de soupape selon l'une quelconque des revendications 1 à 10, **caractérisée en ce que** la tige de fermeture (58) est traversée coaxialement par une barre mobile axialement qui s'enfonce au travers de la chambre de soupape (12) dans le canal de travail (9).

12. Unité de soupape selon la revendication 11, **caractérisée en ce que** la barre est réalisée comme une barre de traction (74) pour des inserts d'étirage-gonflage.

13. Dispositif d'étirage-gonflage pour la fabrication de récipients en plastique et équipé d'une unité de soupape selon l'une quelconque des revendications 1 à 12.

14. Dispositif d'étirage-gonflage selon la revendication 13, **caractérisé en ce qu'**un dispositif d'entraînement (75) est disposé côté arrière à l'extérieur sur le boîtier de soupape (4) de l'unité de soupape (1) pour susciter un mouvement linéaire d'une barre de traction (74), sachant que la barre de traction (74) traverse l'unité de soupape (1).

15. Dispositif d'étirage-gonflage selon la revendication 13 ou 14, **caractérisé en ce qu'**un moule de gonflage (70) est disposé sur le côté avant de l'unité de soupape (1), lequel présente un canal de gonflage (72) communiquant avec une chambre de gonflage (71), qui est relié au canal de travail (9) de l'unité de soupape (1), sachant que le canal de travail (9) et le canal de gonflage (72) sont disposés de manière successive coaxialement et une barre de traction (74) traversant l'unité de soupape (1) s'enfonce par ces deux canaux dans la chambre de gonflage (71).
